# FASCICULE DE BREVET EUROPEEN

(11) **EP 3 318 725 B1**
(45) Date de publication et mention de la délivrance du brevet: **11.03.2020**
(21) Numéro de dépôt: 17199386.8
(22) Date de dépôt: 31.10.2017
(51) Int. Cl.: F01D 11/24, F02C 7/18

(54) **ENSEMBLE DE RACCORDEMENT POUR LE REFROIDISSEMENT D'UNE TURBINE DE TURBOMACHINE**
ANSCHLUSSANORDNUNG FÜR DIE KÜHLUNG EINER TURBINE EINER STRÖMUNGSMASCHINE
CONNECTION ASSEMBLY FOR COOLING A TURBINE OF A TURBINE ENGINE

(30) Priorité: 08.11.2016 FR 1660784
(43) Date de publication de la demande: 09.05.2018
(73) Titulaire: SAFRAN AIRCRAFT ENGINES, 75015 Paris (FR)
(72) Inventeur: PRESTEL, Sébastien Jean Laurent, 77550 MOISSY-CRAMAYEL (FR); JOUY, Baptiste Marie Aubin Pierre, 77550 MOISSY-CRAMAYEL (FR)
(74) Mandataire: Pichat, Thierry

(56) Documents cités:
- EP-A1- 1 205 637
- EP-A2- 1 798 381
- US-A- 5 540 547
- US-A1- 2014 109 596

## Description

### DOMAINE TECHNIQUE

L'invention propose un ensemble pour le raccordement d'au moins un conduit avec un boîtier de distribution d'air.

L'invention propose plus particulièrement un tel ensemble pour un système de pilotage de jeu dans la turbine d'une turbomachine améliorant le raccordement de chaque conduit avec le boîtier.

### ÉTAT DE LA TECHNIQUE ANTÉRIEURE

Dans ce qui suit, et sauf cas particulier (comme lorsque l'on évoque la douille) :
- axe ou axial a pour sens parallèle à l'axe de la turbomachine, axe autour duquel tourne les aubes rotatives de cette turbomachine,
- radial a pour sens radial à cet axe,
- amont et aval définissent les côtés respectivement d'entrée et de sortie des gaz, y compris l'air, qui circulent dans la turbomachine, globalement axialement,
- intérieur et extérieur définissent des positions radiales respectives.

Le pilotage de jeu dans une turbine de turbomachine consiste à contrôler la distance entre les extrémités des aubes mobiles de la turbine et le carter extérieur fixe de la turbine afin d'optimiser le rendement de la turbine.

Ce pilotage de jeu consiste principalement à injecter de manière contrôlée de l'air froid sur le carter extérieur, afin de contrôler sa dilatation.

L'air est acheminé jusqu'au carter par l'intermédiaire d'une pluralité de conduits qui sont raccordés à un boîtier de distribution d'air.

Selon un mode de réalisation connu, le raccordement fluide de chaque conduit avec le boîtier de distribution est réalisé au niveau d'une paroi latérale du boîtier, qui comporte une douille à laquelle une extrémité du conduit est fixée. L'étanchéité entre l'extrémité du conduit et la douille associée est typiquement assurée par un brasage.

Ainsi, est connu un ensemble de raccordement comprenant des douilles et un boîtier de distribution d'air depuis un passage d'entrée d'air du boîtier vers des conduits, chaque conduit de cet ensemble étant raccordé avec le boîtier par une dite douille montée sur un orifice d'une première paroi du boîtier vers lequel arrive l'air., Chaque douille présente un axe le long duquel s'étend une paroi interne au contact de laquelle l'air peut circuler dans la douille.

Dans WO2013001246, le raccordement du volume intérieur du boîtier avec chaque conduit est réalisé par l'intermédiaire d'un tube interne comportant un passage aménagé dans sa paroi cylindrique et qui est ouvert dans le volume intérieur du boîtier, pour la circulation de l'air. En outre, chaque paroi latérale concernée est conformée de manière que le bord de chaque orifice est recourbé vers l'extérieur du boîtier, pour former la douille correspondante à laquelle le tube interne est fixé, par exemple par brasage.

Dans une autre situation, les douilles peuvent être emboitées dans les orifices du boîtier.

Des problèmes d'alimentation en air des conduits se posent de toute façon, alors que l'alimentation en air du boîtier de distribution apparait correcte.

Des pertes de charge ont été constatées. Des études attribuent ces pertes de charge aux raccordements entre conduits et boîtier.

Dans les solutions existantes, le passage des orifices des parois latérales du boîtier de distribution d'air génère en effet des pertes de charge, ce qui diminue l'efficacité du refroidissement du carter extérieur. On peut expliquer cela du fait que les rampes de refroidissement formées par les conduits sont tangentielles alors que le boitier de distribution est globalement axial. A l'interface entre le boitier et les rampes, les coudes créés tendent à produire un décollement de l'air qui réduit la section de passage de cet air. L'augmentation résultante de vitesse induit une forte perte de charge, donc une diminution de la pression totale dans les rampes. Or, cette pression est utile pour un refroidissement efficace du carter extérieur. En effet, une diminution de la pression totale dans les rampes impacte négativement le débit d'air destiné au carter extérieur. Le coefficient d'échange thermique dans le carter en pâtit.

L'invention a notamment pour but de minimiser les risques d'apparition d'une telle situation et plus généralement de favoriser le refroidissement du carter extérieur, ce qui doit être favorable au pilotage de jeu entre les extrémités des aubes mobiles de la turbine et le carter extérieur.

### EXPOSÉ DE L'INVENTION

L'invention propose en conséquence que l'ensemble de raccordement présenté ci-avant soit tel que ladite première paroi du boîtier et la paroi interne de la douille se raccordent entre elles par un congé de raccordement présentant un rayon qui varie sur une partie au moins du périmètre de ladite paroi interne.

Typiquement, les douilles seront du type emboité dans les orifices du boîtier, une extrémité du conduit correspondant venant en outre s'engager dans la douille concernée.

Du fait de ce congé de raccordement prévu sur une partie au moins du périmètre de la paroi interne de la douille, cette paroi intérieure pourra être dépourvue d'arête vive, au moins du côté de l'entrée d'air.

En outre, la prévision d'un tel congé de raccordement « évolutif » périmétriquement, plutôt notamment qu'un congé à profil identique périmétriquement, a permis de travailler sur un autre aspect de la qualité du refroidissement par jets d'air du carter extérieur.

En effet, il s'est avéré que pouvoir réaliser, grâce à lui, et ce a priori notamment là où le rayon est le plus petit, au moins un et de préférence plusieurs méplats situés angulairement, autour dudit axe, à l'écart d'une zone du périmètre de la douille où le rayon du congé de raccordement tend vers un maximum, a permis de rapprocher au mieux du carter les rampes considérées, ce qui doit favoriser l'efficacité de son refroidissement.

Ménager de tels méplats sur la paroi externe de chaque douille facilitera par ailleurs le positionnement des douilles sur le boitier de distribution d'air. Trois méplats écartés angulairement pourront être en particulier réalisés. Ceci permettra de façon pratique, fiable et rapide de vérifier visuellement le bon positionnement de ces douilles. En outre cette solution permettra l'utilisation d'un outillage conventionnel pour le positionnement des douilles.

On pourra en particulier prévoir deux méplats opposés pour la direction et un méplat angulairement intermédiaire pour le sens.

Compte tenu du domaine technique précité, c'est tout naturellement qu'un autre aspect de l'invention concerne une turbomachine d'aéronef caractérisée en ce qu'elle comprend :
- un ensemble comme présenté ci-avant, qui comprend plusieurs dits conduits et douilles, et
- un carter extérieur de turbine autour d'une zone duquel est disposé le boîtier de distribution d'air dont une seconde paroi s'étend de façon adjacente à ladite zone de ce carter extérieur, le long d'elle.

En prévoyant, sur cette turbomachine, que le rayon du congé de raccordement tende vers un maximum à l'endroit d'une zone du périmètre de ladite paroi interne qui est orientée vers le passage d'entrée d'air, on limitera les risques de décollement de l'air, donc les réductions de la section de passage de l'air dans les douilles, au changement de direction, quand l'air passe du boitier aux douilles. Ainsi, on limitera les pertes de charge.

Et de façon à positionner, comme déjà mentionné, les orifice(s) du boîtier, douille(s) et conduits concernés au plus près du carter extérieur de turbine, pour son refroidissement, la turbomachine pourra, sous un autre aspect, être telle que les douilles :
- soient montées sur les orifices du boîtier de façon adjacente à ladite seconde paroi du boîtier,
- et présentent individuellement une paroi externe pourvue périphériquement d'au moins un méplat qui, sur certaines au moins des douilles montées, sera situé de façon (immédiatement) adjacente à ladite seconde paroi du boîtier.

Par ailleurs si, en complément ou en alternative, les douilles sont, sur la turbomachine, montées sur les orifices du boîtier en présentant chacune, périphériquement, plusieurs méplats situés angulairement, autour dudit axe, à l'écart du secteur d'une zone du périmètre de ladite paroi interne où le rayon du congé de raccordement tend vers un maximum, on pourra donc de nouveau :
- faciliter le positionnement des douilles sur le boitier de distribution d'air,
- multiplier la possibilité d'orienter une douille de façon à placer l'un des méplats face à ladite seconde paroi du boîtier, permettant ainsi de réduire la distance entre la douille et le carter extérieur à refroidir,
- maintenir la qualité de l'écoulement d'air en entrée des douilles.

Si nécessaire, les caractéristiques des solutions ici présentées seront encore mieux comprises et d'autres détails et avantages des celles-ci pourront apparaîtront encore à la lecture de la description qui suit, faite à titre d'exemple non limitatif et en référence aux dessins annexés, dans lesquels :
- la figure 1 est une coupe longitudinale schématique d'une turbine de turbomachine aéronautique équipée d'un boîtier de distribution d'air comme dans l'invention ;
- la figure 2 est une vue locale en perspective extérieure des éléments montrés figure 1;
- la figure 3 est une vue locale en perspective renversée du boîtier de distribution d'air ;
- et les figures 4,5 sont respectivement une coupe suivant la ligne IV-IV de la figure 2 et une vue correspondante de face de la douille montée là.

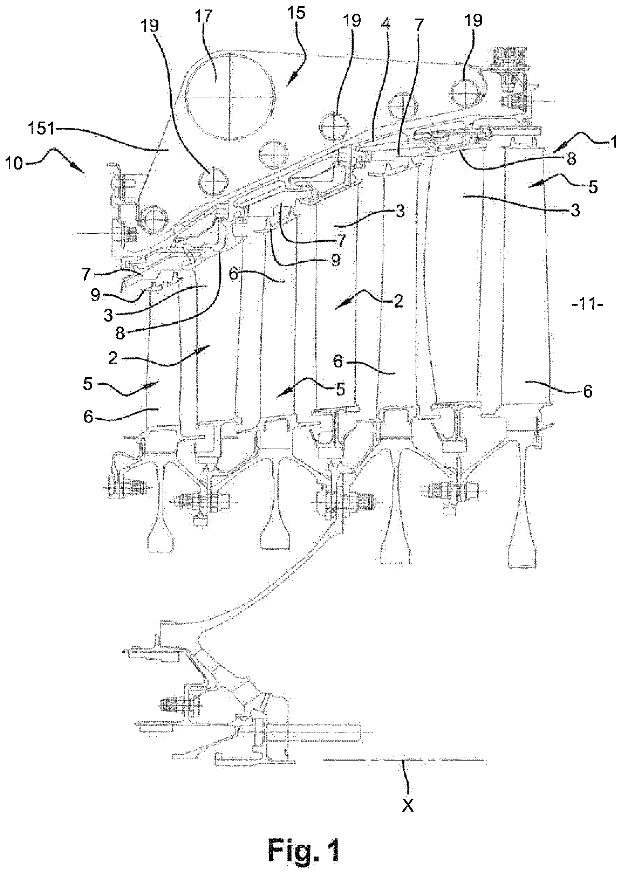

La figure 1 représente une partie de turbine basse pression 1 de turbomachine 10 comprenant plusieurs étages de turbine étagés le long de l'axe X de la turbomachine.

Chaque étage comporte un distributeur 2 à aubes fixes 3 porté par un carter extérieur 4 de la turbine, et une roue de rotor 5 montée en aval du distributeur 2 et à aubes rotatives 6.

Les distributeurs 2 comprennent chacun des parois de révolution respectivement interne et externe 8 qui sont reliées radialement par les aubes 3.

Les aubes 6 tournent autour de l'axe X, dans une enveloppe sensiblement tronconique formée par des secteurs d'anneau 7 portés circonférentiellement bout à bout par le carter extérieur 4 de la turbine.

Les aubes 6 de rotor sont solidaires d'un arbre de turbine, et comprennent chacune des viroles respectivement externe 9 et interne.

Les parois de révolution interne et externe et les viroles externe et interne délimitent entre elles une veine annulaire 11 d'écoulement des gaz dans la turbine.

Pour un pilotage du jeu entre les extrémités de la virole externe 9 des aubes rotatives 6 de la turbine et le carter extérieur 4 fixe, de l'air est donc injecté sur le carter extérieur, afin de contrôler sa dilatation selon les conditions de fonctionnement de la turbine.

De l'air relativement froid est acheminé jusqu'au carter extérieur 4 par l'intermédiaire d'une pluralité de conduits 13 qui sont raccordés à un boîtier 15 de distribution d'air.

Avant cela, l'air arrive jusqu'au boîtier 15 par l'intermédiaire d'un tube d'alimentation 17. A la manière d'une chambre de tranquillisation (plénum chamber en anglais), le boîtier 15 distribue cet air vers les conduits 13.

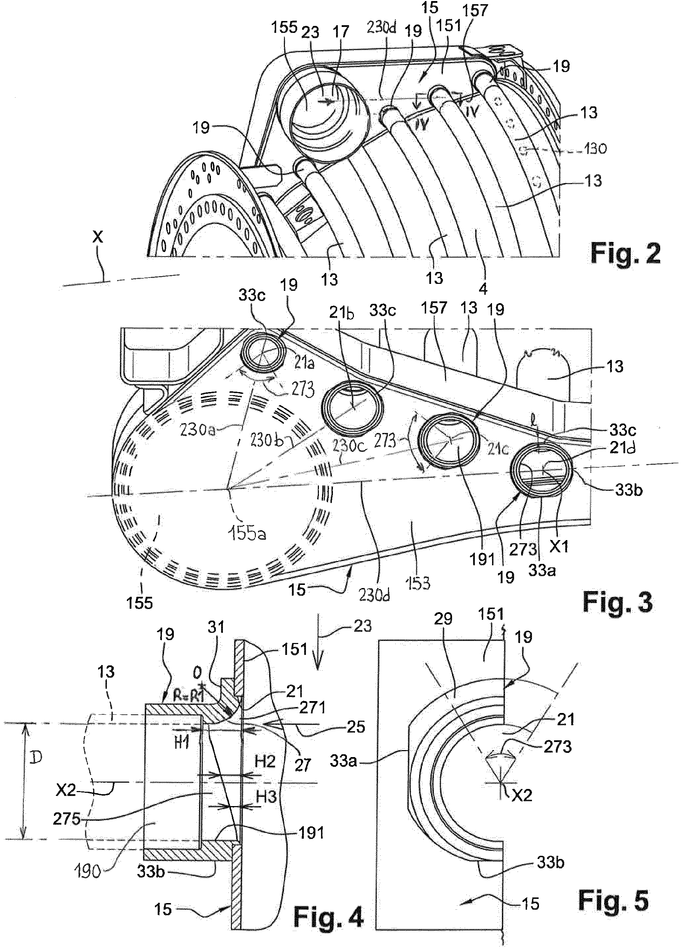

Les conduits 13 sont des tubes percés (quelques orifices 130 sont repérés figure 2).

Le raccordement de chaque conduit 13 avec le boîtier 15 est réalisé au niveau des parois latérales du boîtier, dont une 151 est visible figures 1,2, celle opposée 153 étant visible figure 3.

L'air arrivant par le tube d'alimentation 17 pénètre dans le boîtier 15 par un passage d'entrée d'air 155 ménagé dans l'une (dite première paroi) de ses parois latérales.

Dans la solution présentée et illustrée, des douilles 19 permettent de lier les conduits 13 et le boîtier 15, à travers des orifices 21 ménagés dans les parois latérales 151 ou 153 du boîtier.

Chaque douille 19 est emboitée dans l'orifice 21 correspondant du boîtier 15, comme montré figure 4.

Et une extrémité du conduit 13 correspondant est montée dans la douille 19, par exemple par emboitement, comme montré. L'étanchéité peut être assurée par un brasage.

Chaque douille présente un passage traversant 190 ayant une paroi interne 191 au contact de laquelle l'air peut circuler, après avoir atteint l'orifice 21 concerné.

Figures 2,4, la flèche 23 montre à ce sujet la direction générale de circulation d'air depuis le passage d'entrée d'air 155 vers la douille 19 concernée par la figure 4. Sur cette figure 4, la flèche 25 indique, après inflexion, l'arrivée de l'air vers l'orifice 21 correspondant puis dans la douille.

La transversalité entre l'axe X1 d'allongement du boîtier 15 et l'axe des douilles (voir axe X2 pour la douille des figures 4,5) a induit que, pour la qualité de la circulation de l'air en entrée dans la douille 19, la première paroi (ici 151) du boîtier se raccorde à la paroi interne 191 de la douille par un congé de raccordement 27 présentant un rayon R qui varie sur une partie au moins du périmètre de la paroi interne 191. Ce congé de raccordement est tangent. Sur la figure 4, on a repéré O la position, à l'endroit concerné, du centre de l'arc de cercle générateur, situé donc à l'extérieur de la douille 19.

Ainsi, ce congé de raccordement 27 assurera, parallèlement à l'axe X2, une profondeur d'évasement plus importante sur un secteur 273 du périmètre 275 qu'ailleurs sur ce périmètre (voir profondeurs H1, H2, H3 figure 4).

Cette profondeur d'évasement est définie, parallèlement à l'axe X2, par le rayon R établit entre les deux parois 151 et 191, perpendiculaires l'une à l'autre, à raccorder. Le rayon R du congé de raccordement 27 pourra évoluer comme suit, sur le périmètre de l'orifice 21, entre le plus petit rayon et le plus grand:

| Ø interne (D) du conduit 13 (cm) | | Rayon R (cm) |
|---|---|---|
| 12 à 13 | | 0,5 à 3 |
| 15 à 16 | | 0,5 à 4 |
| 19 à 20 | | 0,5 à 5 |
| 25 à 26 | | 0,5 à 7 |

Ainsi, chaque conduit 13 présentera favorablement un diamètre interne D compris entre 12 et 26 cm et le rayon R du congé de raccordement 27 varie en conséquence entre 0,5 et 7 cm.

Le plus grand rayon R1 pourra être établi et constant sur un secteur angulaire (repère 273 figures 3 et 5) compris entre 90° et 135°, de préférence de l'ordre de 120° à 10° près. C'est sur ce secteur que la plus grande profondeur H1 sera alors établie.

De fait, pour que l'air circulant suivant la direction 23 (figures 2 et 4) infléchisse son chemin vers la direction transversale 25 avec des risques limités de décollement en entrée dans la douille correspondante, au passage de l'orifice 21, le rayon du congé de raccordement 27 tend vers un maximum (R1) à l'endroit d'une zone du périmètre de la paroi interne correspondant au secteur 273 précité et qui est orientée vers le passage d'entrée d'air 155 ; voir par exemple direction 230d figures 2 et 3 et congé en haut de l'illustration figure 4 ou 5.

Comme illustré figure 3, sur un boîtier 15, les douilles 19, et donc leurs orifices 21, sont typiquement sensiblement alignés le long d'une zone du carter extérieur 4, à différentes distances du passage 155. Comme illustré figure 3, on peut par ailleurs considérer que le passage d'entrée d'air 155 et l'orifice 21 de chaque douille 19 présentent des centres (respectivement 155a et 21a à 21d sur l'illustration) par lesquels passent des droites respectives (230a à 230d sur l'illustration) qui montrent que l'air issu du passage d'entrée d'air 155 parvient aux orifices 21 des douilles 19 suivant différentes directions. La direction précitée 23 est l'une d'elle.

Compte tenu de cette réalisation du boîtier 15 et la répartition interne de l'air, il a été choisi aux fins déjà évoquées que le rayon (R) de chaque congé de raccordement 27 soit maximum (R1) sur un secteur angulaire 273 centré sur la droite correspondante, ouvert vers le passage d'entrée d'air 155 d'où l'air arrive et compris entre 90 et 135°, comme illustré pour deux douilles figure 3. Un secteur angulaire de 120°, à 10° près, est encore préféré.

Le maximum (R1) du rayon R peut être constant sur tout le secteur 273.

Pour leurs positionnement, appui sur le boîtier 15 et étanchéité, les douilles 19 peuvent chacune présenter périphériquement un rebord 31 externe, à l'endroit de leur paroi externe 29, vers l'extrémité axiale où elles présentent le congé de raccordement.

A l'écart du secteur 273 du périmètre 275 où la profondeur d'évasement est la plus importante (H1), donc de la zone angulaire où le rayon R est maximum (R1) et peut être constant, le rebord 31 externe est tronqué par un ou plusieurs méplats 33a,33b,33c (voir figure 3) situés angulairement autour de l'axe X2 du passage traversant 190.

Ainsi, on évitera par ailleurs d'altérer l'efficacité dans l'écoulement de l'air atteinte via le congé de raccordement. En effet, à l'endroit de ce secteur 273, le rayon (R1) du congé de raccordement 27 serait tronqué (donc inapproprié) si un méplat y était ménagé.

Il a été ici prévu deux méplats 33a,33c diamétralement opposés pour la direction, et un méplat 33b angulairement intermédiaire entre les deux autres, pour le sens.

En effet, avec le méplat 33b situé à l'opposé diamétral de la zone angulaire où le rayon R est maximum (R1), il est plus facile, lors du positionnement d'une douille vis-à-vis de son orifice 21, de repérer l'orientation angulaire de cette douille autour de l'axe X2. Ainsi, la douille est bien positionnée par rapport à la direction optimale matérialisée par la droite 230a-230d correspondante et le rayon R1 est orienté face à l'arrivée d'air 23.

Quant aux deux autres méplats 33a,33c angulairement intermédiaires entre le secteur 273 et le méplat 33b, ils peuvent justement servir à manœuvrer angulairement la douille pour son positionnement, puisqu'ils sont diamétralement opposés.

En outre de tels méplats peuvent permettre l'utilisation d'un outillage conventionnel (telle une pince) pour le positionnement des douilles.

Ces méplats peuvent enfin permettre de rapprocher radialement du carter extérieur 4 les conduits 13.

En effet, comme on peut le noter en comparant les figures 2 et 3, une paroi transversale 157 (dite seconde paroi) allongée du boîtier 15 de distribution d'air s'étend globalement le long du carter extérieur 4, de façon (immédiatement) adjacente à la zone (ou partie) de ce carter qu'elle recouvre ainsi, afin que l'air sortant des passages 130 des conduits 13 soit soufflé sur le carter extérieur 4, au plus près de lui.

Globalement, la paroi transversale 157 du boîtier 15 est allongée sensiblement parallèlement à l'axe X.

C'est donc notamment pour rapprocher le plus possible du carter extérieur 4 les conduits 13, que l'on a prévu au moins un méplat, en l'espèce le méplat 33b angulairement situé à l'opposé diamétral du secteur 273.

Ainsi voit-on figure 3 que, les douilles 19 étant montées sur les orifices 21, elles sont situées de façon immédiatement adjacente à la seconde paroi transversale 157 du boîtier 15, l'un des méplat (33c en l'espèce) étant orienté vers la paroi 157 pour réduire la distance l qui sépare la paroi 157 de la douille considérée.

## Revendications

1. Ensemble de raccordement, pour une turbomachine, l'ensemble de raccordement comprenant des douilles (19) et un boîtier (15) de distribution d'air
depuis un passage d'entrée d'air (155) du boîtier vers des conduits (13), chaque conduit dudit ensemble étant raccordé avec le boîtier (15) par une dite douille (19) montée sur un orifice (21) d'une première paroi (151,153) du boîtier, ladite douille (19) présentant un axe (X2) le long duquel s'étend une paroi interne (191) au contact de laquelle l'air peut circuler dans la douille, **caractérisé en ce que** ladite première paroi (151,153) du boîtier et la paroi interne (191) de la douille se raccordent entre elles par un congé de raccordement (27) présentant un rayon (R) qui varie sur une partie au moins du périmètre (275) de ladite paroi interne (191).

2. Ensemble selon la revendication 1, dans lequel la douille (12) présente une paroi externe présentant plusieurs méplats (33a,33b,33c) situés angulairement, autour dudit axe (X2), à l'écart d'une zone (273) du périmètre où le rayon (R) du congé de raccordement (27) tend vers un maximum (R1).

3. Ensemble selon la revendication 1 ou 2, dans lequel :
- le passage d'entrée d'air (155) et l'orifice (21) de chaque douille (19) présentent des centres (155a, 21a...) par lesquels passent des droites respectives (230a...230c...), et
- le rayon (R) de chaque congé de raccordement (27) est maximum (R1) sur un secteur angulaire (273) centré sur la droite correspondante, ouvert vers le passage d'entrée d'air (155) d'où l'air arrive et compris entre 90 et 135°.

4. Ensemble selon l'une des revendications précédentes, dans lequel chaque conduit (13) présente un diamètre interne (D) compris entre 12 et 26 cm et le rayon (R) du congé de raccordement (27) varie entre 0,5 et 7 cm.

5. Turbomachine d'aéronef **caractérisée en ce qu'**elle comprend :
- un ensemble selon la revendication 1, qui comprend plusieurs conduits (13) et douilles (19), et
- un carter (4) extérieur de turbine de la turbomachine, autour d'une zone duquel est disposé le boîtier (15) de distribution d'air dont une seconde paroi (157) s'étend de façon adjacente à ladite zone du carter (4) extérieur, le long d'elle.

6. Turbomachine selon la revendication précédente, dans laquelle le rayon (R) du congé de raccordement (27) tend vers un maximum (R1) à l'endroit d'une zone (273) du périmètre de ladite paroi interne (191) qui est orientée vers le passage d'entrée d'air (155).

7. Turbomachine selon l'une des revendications 5 ou 6, dans laquelle les douilles (19) sont montées sur les orifices (21) du boîtier de façon adjacente à ladite seconde paroi (157) du boîtier (15), et présentent individuellement une paroi externe pourvues périphériquement d'au moins un méplat (33a,33b,33c) qui, sur certaines au moins des douilles montées, est situé de façon adjacente à ladite seconde paroi du boîtier (15), de façon à positionner les orifices (21) du boîtier, douilles (19) et conduits (13) concernés au plus près du carter (4) extérieur de turbine.

8. Turbomachine selon la revendication 5, dans laquelle les douilles (19) sont montées sur les orifices (21) du boîtier (15) en présentant chacune, périphériquement, plusieurs méplats situés angulairement, autour dudit axe (X2), à l'écart de ladite zone (273) du périmètre.

## Patentansprüche

1. Verbindungsanordnung mit Buchsen (19) und einem Luftverteilergehäuse (15) für eine Einrichtung zum Steuern der Spaltweite, in einer Turbotriebwerks, zur Luftverteilung von einem Lufteinlasskanal (155) des Gehäuses zu Leitungen (13), wobei jede Leitung der Anordnung mit dem Gehäuse (15) durch eine Buchse (19) verbunden ist, die an einer Öffnung (21) einer ersten Wand (151, 153) des Gehäuses angebracht ist, wobei die Buchse (19) eine Achse (X2) aufweist, entlang der sich eine Innenwand (191) erstreckt, in Kontakt mit welcher die Luft in der Buchse strömen kann, **dadurch gekennzeichnet, dass** die erste Wand (151, 153) des Gehäuses und die Innenwand (191) der Buchse durch eine Verbindungskehle (27) miteinander verbunden sind, die einen Radius (R) aufweist, der zumindest über einen Teil des Umfangs (275) der Innenwand (191) variiert.

2. Anordnung nach Anspruch 1, wobei die Buchse (12) eine Außenwand mit mehreren Abflachungen (33a, 33b, 33c) aufweist, die winklig um die Achse (X2) herum im Abstand von einem Bereich (273) des Umfangs liegen, in dem der Radius (R) der Verbindungskehle (27) ein Maximum (R1) erreicht.

3. Anordnung nach Anspruch 1 oder 2, wobei:
- der Lufteinlasskanal (155) und die Öffnung (21) einer jeden Buchse (19) Mittelpunkte (155a, 21a ...) aufweisen, durch die jeweilige Geraden (230a ... 230c ...) verlaufen, und
- der Radius (R) jeder Verbindungskehle (27) über einen Winkelsektor (273) maximal (R1) ist, der auf die entsprechende Gerade zentriert ist und sich zum Lufteinlasskanal (155), von dem aus die Luft eintritt, öffnet und zwischen 90 und 135° beträgt.

4. Anordnung nach einem der vorangehenden Ansprüche, wobei jede Leitung (13) einen Innendurchmesser (D) zwischen 12 und 26 cm aufweist und der Radius (R) der Verbindungskehle (27) zwischen 0,5 und 7 cm variiert.

5. Turbotriebwerk für Luftfahrzeuge, **dadurch gekennzeichnet, dass** es enthält:
- eine Anordnung nach Anspruch 1, die mehrere Leitungen (13) und Buchsen (19) enthält, und
- ein Turbinenaußengehäuse (4) des Turbotriebwerks mit einem Bereich, um den herum das Luftverteilergehäuse (15) angeordnet ist, von welchem eine zweite Wand (157) sich angrenzend an den Bereich des Außengehäuses (4) und entlang desselben erstreckt.

6. Turbotriebwerk nach dem vorangehenden Anspruch, wobei der Radius (R) der Verbindungskehle (27) ein Maximum (R1) an der Stelle eines Bereichs (273) des Umfangs der Innenwand (191) erreicht, der zum Lufteinlasskanal (155) hin ausgerichtet ist.

7. Turbotriebwerk nach einem der Ansprüche 5 oder 6, wobei die Buchsen (19) an den Gehäuseöffnungen (21) an die zweite Wand (157) des Gehäuses (15) angrenzend angebracht sind und einzeln eine Außenwand aufweisen, die umfänglich mit zumindest einer Abflachung (33a, 33b, 33c) versehen ist, die zumindest an bestimmten der angebrachten Buchsen angrenzend an die zweite Wand des Gehäuses (15) liegt, so dass die betreffenden Gehäuseöffnungen (21), Buchsen (19) und Leitungen (13) so nahe wie möglich am Turbinenaußengehäuse (4) positioniert sind.

8. Turbotriebwerk nach Anspruch 5, wobei die Buchsen (19) an den Öffnungen (21) des Gehäuses (15) angebracht sind und dabei jeweils umfänglich mehrere Abflachungen aufweisen, die winklig um die Achse (X2) herum im Abstand von dem Bereich (273) des Umfangs liegen.

## Claims

1. A connecting assembly for a turbomachine, the connecting assembly comprising bushes (19) and an housing (15) for distributing air from an air inlet passage (155) of the housing to ducts (13), with each duct of said assembly being connected with the housing (15) by one said bush (19) mounted on an orifice (21) of a first wall (151,153) of the housing, with said bush (19) having an axis (X2) along which an inner wall (191) extends, in contact with which air can circulate in the bush, **characterized in that** said first wall (151,153) of the housing and the inner wall (191) of the bush are connected together by a fillet (27) having a radius (R) which varies over at least a part of the perimeter (275) of said inner wall (191).

2. The connecting assembly according to claim 1, wherein said bush (12) has an outer wall having several flat lugs (33a, 33b, 33c) positioned angularly, about said axis (X2), at a distance from a zone (273) of the perimeter where the radius (R) of the fillet (27) tends towards a maximum (R1).

3. The connecting assembly according to claim 1 or 2, wherein:
- the air inlet passage (155) and the orifice (21) of each bush (19) have centers (155a, 21a...) through which respective straight lines (230a...230c...) pass, and
- the radius (R) of each fillet (27) is maximum (R1) over an angular sector (273) centered on the corresponding straight line, open towards the air inlet passage (155) which air comes from, and ranging from 90 to 135°.

4. The connecting assembly according to one of the preceding claims, wherein each duct (13) has an inner diameter (D) between 12 and 26cm and the radius (R) of the fillet (27) varies from 0.5 to 7cm.

5. A turbine engine for an aircraft, **characterized in that** it comprises:
- the connecting assembly according to claim 1, which comprises several ducts (13) and bushes (19), and
- an outer casing (4) of a turbine of the turbine engine, about a zone of which is positioned the housing (15) for distributing air, a second wall (157) of which extends to be adjacent to said zone of the outer casing (4), therealong.

6. The turbine engine according to claim 5, wherein the radius (R) of the fillet (27) tends to a maximum (R1) at the place of a zone (273) of the perimeter of said inner wall (191) which is oriented towards the air inlet passage (155).

7. The turbine engine according to one of claims 5 or 6, wherein the bushes (19) are mounted on the orifices (21) of the housing to be adjacent to said second wall (157) of the housing (15), and individually have an outer wall provided, on the periphery, with at least one flat lug (33a, 33b, 33c) which, at least on some of the mounted bushes, is positioned adjacent to said second wall of the housing (15), so as to position the orifices (21) of the concerned housing, bushes (19) and ducts (13) as close to the outer casing (4) of the turbine as possible.

8. The turbine engine according to claim 5, wherein the bushes (19) are mounted on the orifices (21) of the housing (15) with each having, peripherally, several flat lugs positioned angularly, about said axis (X2), at a distance from said zone (273) of the perimeter.
